# EUROPÄISCHE PATENTANMELDUNG

(11) **EP 4 617 027 A1**
(43) Veröffentlichungstag der Anmeldung: **17.09.2025**
(21) Anmeldenummer: 25163546.2
(22) Anmeldetag: 13.03.2025
(51) Int. Cl.: B29B 9/06, B29C 48/04, B29C 48/05

(54) **GRANULIERHAUBE UND GRANULIERVORRICHTUNG**

(30) Priorität: 13.03.2024 DE 102024107209
(71) Anmelder: Coperion GmbH, 70469 Stuttgart (DE)
(72) Erfinder: Bertuccioli, Daniele, 71282 Hemmingen (DE); Schweikle, Jürgen, 74172 Neckarsulm (DE); Huber, Stefan, 71292 Friolzheim (DE); Glindkamp, Stephan, 78234 Engen (DE)
(74) Vertreter: Ege Lee & Roider Patentanwälte

(57) **Zusammenfassung**

Granulierhaube (114) für eine Granuliervorrichtung (100) zur Granulierung von Materialsträngen, umfassend ein erstes Granulierhaubenteil (116), das zum Anordnen um eine Lochplatte (112) der Granuliervorrichtung (100) ausgebildet ist; und ein zweites Granulierhaubenteil (118), das an dem ersten Granulierhaubenteil (116) schwenkbar angeordnet ist, wobei an dem zweiten Granulierhaubenteil (118) ein Messerkopf (126) und/oder eine Antriebseinrichtung (132) der Granuliervorrichtung (100) anbringbar ist/sind, wobei das zweite Granulierhaubenteil (118) mehrteilig, insbesondere zweiteilig, ausgebildet ist, sowie Granuliervorrichtung (100) mit einer solchen Granulierhaube (114).

## Beschreibung

Die Erfindung betrifft eine Granulierhaube für eine Granuliervorrichtung. Außerdem betrifft die Erfindung eine Granuliervorrichtung zur Granulierung von Materialsträngen.

Aus dem Dokument DE 103 22 610 A1 ist eine Granuliervorrichtung mit einer Lochplatte, einem Messerkopf und einer geteilten Granulierhaube bekannt. Die Granulierhaube ist aus zwei Granulierhaubenteilen gebildet. Dabei ist das erste Granulierhaubenteil mit dem Extruder verbunden, während das andere zweite Granulierhaubenteil mit einem Wagen verbunden ist. Auf dem Wagen ist ein Antriebsmotor angeordnet, der mit dem Messerkopf über eine Messerwelle verbunden ist. Der Messerkopf weist mehrere Granuliermesser auf, die an einer stromabwärtigen Seite gegen die Lochplatte anliegen und mittels des Antriebsmotors drehangetrieben werden, sodass durch die Lochplatte tretende Materialstränge zu Granulat geschnitten werden. Zur Erzielung einer hohen Schnittqualität muss die Position der Granuliermesser zu der Lochplatte exakt eingestellt werden. Hierfür und zu Wartungszwecken muss die Granulierhaube geöffnet werden. Dies erfordert, dass der gesamte Wagen mit dem zweiten Granulierhaubenteil und dem Antriebsmotor samt Antriebsstrang aufwändig verfahren werden muss. Dazu werden meist hydraulische Einrichtungen eingesetzt, um den schweren Wagen zu verschieben und die Granulierhaube zu stützen.

Der Erfindung liegt die Aufgabe zugrunde, eine eingangs genannte Granulierhaube strukturell und/oder funktionell zu verbessern. Außerdem liegt der Erfindung die Aufgabe zugrunde, eine eingangs genannte Granuliervorrichtung strukturell und/oder funktionell zu verbessern.

Es ist daher eine Aufgabe der vorliegenden Erfindung, eine Granulierhaube bereitzustellen, die neben einer guten Zugänglichkeit zu Wartungs- und Reinigungszwecken auch eine einfachere und ergonomischere Einstellung des Messerkopfs und der Messerwelle gewährleisten kann.

Die Aufgabe wird gelöst mit einer Granulierhaube mit den Merkmalen des Anspruchs 1. Außerdem wird die Aufgabe gelöst mit einer Granuliervorrichtung mit den Merkmalen des Anspruchs 12. Vorteilhafte Ausführungen und/oder Weiterbildungen sind Gegenstand der Unteransprüche, der Beschreibung und/oder den begleitenden Figuren.

Sowohl die in den Patentansprüchen angegebenen Merkmale als auch die in den nachfolgenden Ausführungsbeispielen der erfindungsgemäßen Vorrichtung angegebenen Merkmale sind jeweils für sich allein oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Der Kern der Erfindung besteht insbesondere darin, den Antrieb und/oder den Messerkopf an einem der Lochplatte gegenüberliegenden schwenkbaren Granulierhaubenteil anzuordnen und so eine einfache und gute Zugänglichkeit für Wartungs- und Reinigungszwecke zu ermöglichen. Ferner kann dadurch eine einfachere und ergonomischere Einstellung des Messerkopfs und der Messerwelle gewährleistet werden. Auch kann vor der Granuliervorrichtung eine Filtereinrichtung, beispielsweise eine Siebwechseleinrichtung, angeordnet werden, da der Antrieb nicht mehr im Weg ist.

Gemäß einem Aspekt ist eine Granulierhaube für eine Granuliervorrichtung vorgesehen. Die Granuliervorrichtung kann zur Granulierung von Materialsträngen, beispielsweise Kunststoff-Materialsträngen, eingerichtet sein. Dabei werden die Kunststoff-Materialstränge aus einer Kunststoffschmelze erzeugt. In einer bevorzugten Variante ist die Granuliervorrichtung als exzentrische Granuliervorrichtung ausgebildet. Die Granuliervorrichtung kann insbesondere als Heißgranuliervorrichtung ausgebildet sein, bei der der Schnitt von Granulat trocken erfolgt.

Die Granulierhaube weist ein erstes Granulierhaubenteil und ein zweites Granulierhaubenteil auf. Das erste Granulierhaubenteil ist zum Anordnen um eine Lochplatte der Granuliervorrichtung ausgebildet. Dabei kann das erste Granulierhaubenteil die Lochplatte umgeben oder umschließen, beispielsweise radial außen an der Lochplatte. Unter dem Begriff Anordnen kann beispielsweise gelagert, montiert und/oder befestigt verstanden werden. Ferner kann das erste Granulierhaubenteil an einem Gehäuseteil einer Schneckenmaschine und/oder an einem Granulierkopfgehäuse anbringbar oder angebracht, insbesondere befestigt, sein. In einer Variante kann die Lochplatte an dem Gehäuseteil der Schneckenmaschine befestigt sein. Bei der Schneckenmaschine kann es sich um einen Extruder, beispielsweise einen Zweiwellenextruder, handeln. Das Granulierkopfgehäuse kann Teil der Granuliervorrichtung sein und mindestens einen Kanal aufweisen, durch den die aufgeschmolzene und zu granulierende Materialschmelze der Lochplatte zugeführt wird, die an einer stromabwärtigen Seite an dem Granulierkopfgehäuse befestigt ist. Das Granulierkopfgehäuse, die Lochplatte und/oder das erste Granulierhaubenteil kann/können ortsfest angeordnet und/oder über zumindest eine Stütze auf einem Fundament oder Maschinengestell abgestützt sein.

Das zweite Granulierhaubenteil ist an dem ersten Granulierhaubenteil schwenkbar angeordnet. Dabei kann das zweite Granulierhaubenteil derart relativ zum ersten Granulierhaubenteil schwenkbar angeordnet sein, dass eine Drehachse des Messerkopfs exzentrisch zu der Lochplatte angeordnet oder anordenbar ist. D.h., die Lochplatte kann, insbesondere in einem geschlossenen Zustand der Granulierhaube, exzentrisch zur Drehachse des Messerkopfs angeordnet sein, wodurch eine exzentrische Granulierung realisiert ist. Unter Verschwenken kann ein Drehen und/oder Verdrehen um eine Schwenkachse verstanden werden. Zusätzlich oder alternativ kann unter Verschwenken auch eine Bewegung entlang einer Bahnkurve verstanden werden. Folglich kann ein Verschwenken sowohl eine Drehbewegung um eine Schwenkachse als auch einen translatorischen Bewegungsanteil umfassen. Unter dem Begriff angeordnet kann beispielsweise gelagert, montiert und/oder befestigt verstanden werden. Zum Verschwenken kann zwischen dem ersten Granulierhaubenteil und dem zweiten Granulierhaubenteil eine Schwenkeinrichtung bzw. ein Schwenkmechanismus vorgesehen sein. Dabei kann es sich beispielsweise um ein Scharnier oder dergleichen handeln. Das zweite Granulierhaubenteil kann somit mittels eines Scharniers an dem ersten Granulierhaubenteil befestigt sein. In einer Variante kann an dem ersten Granulierhaubenteil zumindest eine Schwenkachse vorgesehen sein, die mit dem zweiten Granulierhaubenteil derart verbunden ist, dass das zweite Granulierhaubenteil relativ zum ersten Granulierhaubenteil schwenkbar ist. Die zumindest eine Schwenkachse kann vertikal ausgerichtet sein. Vorteilhaft ist, wenn der Drehpunkt so nah wie möglich am Schwerpunkt, d.h. im Wesentlichen im Bereich des Schwerpunkts, liegt.

Ferner ist an dem zweiten Granulierhaubenteil der Messerkopf und/oder die Antriebseinrichtung der Granuliervorrichtung anbringbar. Hierzu kann das zweite Granulierhaubenteil eine Ausnehmung aufweisen, in der eine Antriebswelle des Messerkopfs und/oder der Antriebseinrichtung, insbesondere drehbar, aufnehmbar ist. Hierfür kann an dem zweiten Granulierhaubenteil ein Wellenlager vorgesehen sein. Die Antriebseinrichtung kann einen Antriebsmotor, beispielsweise einen Elektromotor, und ggf. ein Antriebswellenlager aufweisen. Das erste Granulierhaubenteil und das zweite Granulierhaubenteil definieren einen Innenraum der Granulierhaube. Im geschlossenen Zustand der Granulierhaube ist der Messerkopf im Innenraum angeordnet und der Lochplatte zugewandt. Folglich kann der Messerkopf an einer Innenseite und die Antriebseinrichtung an einer Außenseite des zweiten Granulierhaubenteils anordenbar oder angeordnet sein. Die Antriebswelle kann dabei durch das zweite Granulierhaubenteil hindurchgeführt sein. Der Messerkopf kann mit der Antriebswelle drehfest verbunden und mittels der Antriebseinrichtung um eine Drehachse drehantreibbar sein. In einer Alternative kann der Messerkopf an dem ersten Granulierhaubenteil, insbesondere an einer Innenseite des ersten Granulierhaubenteils, anordenbar oder angeordnet sein. In diesem Fall kann die Antriebseinrichtung an dem zweiten Granulierhaubenteil, insbesondere an einer Außenseite des zweiten Granulierhaubenteils, anordenbar oder angeordnet sein. In einer anderen Variante kann der Messerkopf an dem zweiten Granulierhaubenteil, insbesondere an einer Innenseite des zweiten Granulierhaubenteils, anordenbar oder angeordnet sein. In dieser Variante kann die Antriebseinrichtung an dem ersten Granulierhaubenteil, insbesondere an einer Außenseite des ersten Granulierhaubenteils, anordenbar oder angeordnet sein. Ferner kann eine Kupplungseinrichtung vorgesehen sein, die zwischen dem Messerkopf und der Antriebseinrichtung wirksam ist oder wird. Die Kupplungseinrichtung kann insbesondere zum Koppeln der Antriebseinrichtung mit dem Messerkopf ausgebildet sein, beispielsweise während eines Schließvorgangs der Granulierhaube. Im geschlossenen Zustand der Granulierhaube kann dann der Messerkopf über die Kupplungseinrichtung mit der Antriebseinrichtung wirksam gekoppelt sein, wodurch der Messerkopf mittels der Antriebseinrichtung drehantreibar ist.

Des Weiteren ist das zweite Granulierhaubenteil mehrteilig, insbesondere zweiteilig, ausgebildet. Beispielsweise kann das zweite Granulierhaubenteil eine erste Haubenteilhälfte und eine zweite Haubenteilhälfte aufweisen. Dabei kann zumindest eine der beiden Haubenteilhälften des zweiten Granulierhaubenteils an dem ersten Granulierhaubenteil schwenkbar angeordnet sein. Hierdurch kann ein besonders schneller und bedienungsfreundlicher Zugang ermöglicht werden. Die erste und/oder zweite Haubenteilhälfte des zweiten Granulierhaubenteils kann mittels der vorstehend beschriebenen Schwenkeinrichtung bzw. dem Schwenkmechanismus an dem ersten Granulierhaubenteil angeordnet, beispielsweise schwenkbar angelengt und/oder gelagert, sein. Hierzu kann die erste und/oder zweite Haubenteilhälfte des zweiten Granulierhaubenteils jeweils mit einem Scharnier oder dergleichen an dem ersten Granulierhaubenteil befestigt sein. Vorzugsweise sind die erste Haubenteilhälfte und die zweite Haubenteilhälfte des zweiten Granulierhaubenteils an gegenüberliegenden Seiten des ersten Granulierhaubenteils angeordnet. In einer Variante kann eine Haubenteilhälfte des zweiten Granulierhaubenteils feststehend und die andere Haubenteilhälfte des zweiten Granulierhaubenteils relativ zum ersten Granulierhaubenteil schwenkbar sein. In einer bevorzugten Variante sind jedoch beide Haubenteilhälften des zweiten Granulierhaubenteils schwenkbar an dem ersten Granulierhaubenteil angeordnet. Es ist auch möglich, dass das zweite Granulierhaubenteil im Wesentlichen als Doppeltür, beispielsweise Doppelflügeltür, ausgebildet ist. In einer solchen Variante können die erste Haubenteilhälfte und die zweite Haubenteilhälfte des zweiten Granulierhaubenteils die beiden Flügeltüren bilden.

Zwischen dem ersten Granulierhaubenteil und dem zweiten Granulierhaubenteil kann eine erste Dichteinrichtung vorgesehen sein. Die erste Dichteinrichtung kann insbesondere derart angeordnet und ausgebildet sein, dass das erste Granulierhaubenteil und das zweite Granulierhaubenteil gegeneinander abdichtbar sind. Im geschlossenen bzw. betriebsfertigen Zustand können das erste Granulierhaubenteil und das zweite Granulierhaubenteil somit dicht gegeneinander anliegen und dadurch den Innenraum der Granulierhaube, beispielsweise luftdicht, abschließen. In einer Variante kann die erste Dichteinrichtung eine umlaufende und/oder aufblasbare Dichtung sein. Zur Aufnahme der Dichteinrichtung kann/können das erste und/oder das zweite Granulierhaubenteil eine Dichtungsnut aufweisen. Die Dichtungsnut kann im Wesentlichen entlang des Umfangs an einer dem gegenüberliegenden Granulierhaubenteil zugewandten Seite vorgesehen sein. Vorzugsweise kann die Dichtungsnut am ersten Granulierhaubenteil vorgesehen sein. Dabei kann die Dichtungsnut um einen Auslassabschnitt des ersten Granulierhaubenteils herum verlaufen. In der Dichtungsnut kann die Dichtung angeordnet, insbesondere gehalten, sein. Die Dichtung kann eine flexible Dichtung sein. Hierzu kann die Dichtung aus einem elastischen Material sein bzw. daraus hergestellt sein. Bei dem elastischen Material kann es sich um Kunststoff oder Gummi handeln. Die Dichtung kann schlauchförmig ausgebildet sein. Die Dichtung kann ferner als Dichtungshohlprofil ausgebildet sein, das mit Luft befüllt und dadurch aufgeblasen werden kann. Das Dichtungshohlprofil kann beispielsweise ein Dichtschlauch sein. Das Aufpumpen der Dichtung kann insbesondere im geschlossenen Zustand der Granulierhaube und vor dem Start der Granulierung erfolgen. Vor dem Öffnen und/oder zum Öffnen der Granulierhaube kann der Druck bzw. die in der Dichtung vorhandene Luft wieder ablassbar sein.

Zwischen der ersten Haubenteilhälfte und der zweiten Haubenteilhälfte des zweiten Granulierhaubenteils kann eine zweite Dichteinrichtung vorgesehen sein. Die zweite Dichteinrichtung kann insbesondere derart vorgesehen und ausgebildet sein, dass die erste Haubenteilhälfte und die zweite Haubenteilhälfte des zweiten Granulierhaubenteils gegeneinander abdichtbar sind. Im geschlossenen bzw. betriebsfertigen Zustand können die erste Haubenteilhälfte und die zweite Haubenteilhälfte des zweiten Granulierhaubenteils somit dicht gegeneinander anliegen und dadurch den Innenraum der Granulierhaube, beispielsweise luftdicht, abschließen. Die zweite Dichteinrichtung kann an der ersten und/oder zweiten Haubenteilhälfte des zweiten Granulierhaubenteils angeordnet sein. In einer Variante kann die zweite Dichteinrichtung zumindest ein, vorzugsweise zwei, Dichtelement/-elemente aufweisen. Das zumindest eine Dichtelement kann eine flexible Dichtung sein. Hierzu kann das zumindest eine Dichtelement aus einem elastischen Material sein bzw. daraus hergestellt sein. Bei dem elastischen Material kann es sich um Kunststoff oder Gummi handeln. Das zumindest eine Dichtelement kann schnurförmig oder schlauchförmig ausgebildet sein. Das zumindest eine Dichtelement kann eine Dichtschnur sein. Im Fall von zwei Dichtelementen, können die beiden Dichtelemente beispielsweise in ihrer Längserstreckung im Wesentlichen parallel zueinander angeordnet sein. Zusätzlich oder alternativ können die beiden Dichtelemente im Wesentlichen zueinander ausgerichtet, beispielsweise im Wesentlichen gegenüberliegend oder in ihrer Quererstreckung im Wesentlichen senkrecht zueinander angeordnet sein. Dabei kann die Quererstreckung kürzer sein als die Längserstreckung des Dichtelements. In einer Variante können die beiden Dichtelemente an Dichtflächen der ersten und/oder zweiten Haubenteilhälfte des zweiten Granulierhaubenteils angeordnet, beispielsweise angeklebt, sein. Dabei kann ein erstes Dichtelement an einer Dichtfläche der ersten Haubenteilhälfte des zweiten Granulierhaubenteils und ein zweites Dichtelement an einer Dichtfläche der zweiten Haubenteilhälfte des zweiten Granulierhaubenteils angeordnet sein. Alternativ können beide Dichtelemente an zumindest einer Dichtfläche der ersten oder zweiten Haubenteilhälfte des zweiten Granulierhaubenteils angeordnet sein. Die beiden Dichtelemente können im geöffneten Zustand und/oder im geschlossenen Zustand der Granulierhaube auch aneinander anliegen bzw. sich abschnittsweise berühren.

In einer Variante kann an dem zweiten Granulierhaubenteil ein Einlass zum Zuführen eines Fördermediums vorgesehen sein. Das Fördermedium kann beispielsweise ein Gas oder Luft sein. Das Fördermedium kann zum Kühlen des erzeugten Granulats und/oder zum Herausführen des erzeugten Granulats aus der Granulierhaube dienen. Vorzugsweise kann der Einlass zum Zuführen des Fördermediums an der ersten Haubenteilhälfte des zweiten Granulierhaubenteils angeordnet sein. Dabei kann/können der Messerkopf und/oder die Antriebseinrichtung der Granuliervorrichtung an der zweiten Haubenteilhälfte des zweiten Granulierhaubenteils anbringbar oder angebracht sein. Der Einlass kann ferner einen Anschlussabschnitt aufweisen, der im Wesentlichen im Bereich der Schwenkachse des zweiten Granulierhaubenteils bzw. der ersten Haubenteilhälfte des zweiten Granulierhaubenteils angeordnet ist. Zusätzlich oder alternativ kann der Anschlussabschnitt zu der Schwenkachse im Wesentlichen axial ausgerichtet sein. D.h., der Anschlussabschnitt kann sich im Wesentlichen in Richtung und/oder parallel zu der Schwenkachse erstrecken. In einer Variante kann der Anschlussabschnitt im Wesentlichen koaxial zu der Schwenkachse ausgerichtet sein. Dadurch kann eine Zuführung des Fördermediums im Wesentlichen im Drehpunkt erfolgen, sodass keine beweglichen Kanäle oder Leitungen mit ggf. großen Biegeradien verwendet werden müssen. Ferner kann der Anschlussabschnitt trichter- oder zylinderförmig ausgebildet sein. Dabei kann der Anschlussabschnitt zwei Zylinderelemente aufweisen, die relativ zueinander um eine gemeinsame Achse verdrehbar sind und wobei eines der beiden Zylinderelemente innerhalb des anderen Zylinderelements zumindest abschnittsweise aufgenommen und/oder angeordnet ist.

Vorzugsweise kann an dem ersten Granulierhaubenteil ein Auslassabschnitt vorgesehen sein. Der Auslassabschnitt kann eine Auslassöffnung zum Abführen des Granulats aufweisen. Vorteilhaft ist, wenn der Auslassabschnitt im Wesentlichen unterhalb der Lochplatte angeordnet ist. In einer Variante kann sich der Auslassabschnitt im Wesentlichen horizontal erstrecken, beispielsweise senkrecht zu einer vertikalen Hauptseitenfläche des ersten Granulierhaubenteils. Bei der Hauptseitenfläche kann es sich um eine Granulierhaubenrückwand handeln. In einer weiteren Variante kann an dem ersten Granulierhaubenteil ein Stützabschnitt zum Stützen und/oder Justieren des zweiten Granulierhaubenteils vorgesehen sein. In einem geschlossenen Zustand der Granulierhaube kann sich dabei das zweite Granulierhaubenteil bzw. dessen beiden Haubenteilhälften an dem Stützabschnitt abstützen. Während des Schließens der Granulierhaube kann das zweite Granulierhaubenteil bzw. können dessen beiden Haubenteilhälften mittels des Stützabschnitts justiert und/oder abschnittsweise in Position geführt werden. Vorteilhaft ist, dass sich das zweite Granulierhaubenteil bzw. dessen beiden Haubenteilhälften über die Justierung abstützen können, sodass die Antriebseinrichtung ausgerichtet ist und/oder sich das zweite Granulierhaubenteil inklusive Antriebseinrichtung nicht durchbiegt. Der Auslassabschnitt und der Stützabschnitt können insbesondere einen gemeinsamen Abschnitt bilden und/oder ineinander übergehen. Der Auslassabschnitt und/oder der Stützabschnitt kann/können auch als Austragsstutzen ausgebildet sein.

Zum Verriegeln der Granulierhaube kann zumindest eine erste Verriegelungseinrichtung vorgesehen sein. Mit der zumindest einen ersten Verriegelungseinrichtung kann das zweite Granulierhaubenteil mit dem ersten Granulierhaubenteil verriegelbar bzw. verschließbar sein. In einer bevorzugten Variante können mindestens zwei, beispielsweise vier, erste Verriegelungseinrichtungen vorgesehen sein. Wenn das zweite Granulierhaubenteil zwei- oder mehrteilig ausgebildet ist, kann/können zumindest eine, vorzugsweise zwei, erste Verriegelungseinrichtung/-en zum Verriegeln der ersten Haubenteilhälfte des zweiten Granulierhaubenteils mit dem ersten Granulierhaubenteil vorgesehen sein. Zusätzlich oder alternativ kann/können zumindest eine, vorzugsweise zwei, erste Verriegelungseinrichtung/-en zum Verriegeln der zweiten Haubenteilhälfte des zweiten Granulierhaubenteils mit dem ersten Granulierhaubenteil vorgesehen sein.

In einer weiteren Variante kann zumindest eine zweite Verriegelungseinrichtung vorgesehen sein. Mit der zumindest einen zweiten Verriegelungseinrichtung kann die erste Haubenteilhälfte des zweiten Granulierhaubenteils mit der zweiten Haubenteilhälfte des zweiten Granulierhaubenteils verriegelbar bzw. verschließbar sein. Vorzugweise können zwei zweite Verriegelungseinrichtungen vorgesehen sein, durch die die beiden Haubenteilhälften des zweiten Granulierhaubenteils miteinander verriegelt werden können. Bei der zumindest einen ersten und/oder zweiten Verriegelungseinrichtung kann es sich beispielsweise um Spanner, wie Schnellspanner oder Spannelemente, oder dergleichen handeln. Zur Erhöhung der Gesamtsteifigkeit der Granulierhaube können auch verstärkte Spanner zum Einsatz kommen.

Um eine Verformung des zweiten Granulierhaubenteils zu vermeiden oder zumindest signifikant zu verringern, kann das zweite Granulierhaubenteil zumindest abschnittsweise ausgesteift sein. Hierzu können beispielsweise Verstärkungsstrukturen oder Verstärkungsgeometrien vorgesehen sein. Dadurch verformt sich das zweite Granulierhaubenteil entweder überhaupt nicht oder nur sehr gering. Vorteilhaft ist auch, dass dadurch das Granuliermesser nicht abheben bzw. den Kontakt zur Lochplatte nicht verlieren kann, sobald das Granuliermesser auf die Lochplatte drückt, um Materialstränge zu Granulat zu schneiden.

Gemäß einem weiteren Aspekt ist eine Granuliervorrichtung zur Granulierung von Materialsträngen vorgesehen. Die Granuliervorrichtung kann zur Granulierung von Materialsträngen, beispielsweise Kunststoff-Materialsträngen, eingerichtet sein. Dabei werden die Kunststoff-Materialstränge aus einer Kunststoffschmelze erzeugt. Hierzu weist die Granuliervorrichtung eine Lochplatte zur Erzeugung von Materialsträngen auf. Ferner umfasst die Granuliervorrichtung einen Messerkopf. Der Messerkopf ist zur Erzeugung von Granulat aus den Materialsträngen an einer stromabwärtigen Seite der Lochplatte angeordnet. Hierfür kann der Messerkopf zumindest ein Granuliermesser aufweisen. In einer bevorzugten Variante ist die Lochplatte exzentrisch zur Drehachse des Messerkopfs angeordnet. Die Granuliervorrichtung kann daher als exzentrische Granuliervorrichtung ausgebildet sein. Beispielsweise kann die Granuliervorrichtung als Heißgranuliervorrichtung ausgebildet sein, bei der der Schnitt von Granulat trocken erfolgt.

Ferner kann die Granuliervorrichtung eine Antriebseinrichtung umfassen. Die Antriebseinrichtung kann zum Drehantreiben des Messerkopfs um eine Drehachse ausgebildet sein. Die Lochplatte kann insbesondere exzentrisch zu der Drehachse angeordnet sein. Die Antriebseinrichtung kann einen Antriebsmotor, beispielsweise einen Elektromotor, eine Antriebswelle und ggf. ein Antriebswellenlager aufweisen. Der Messerkopf kann mit der Antriebswelle drehfest verbunden und mittels der Antriebseinrichtung um eine Drehachse drehantreibbar sein. In einer Variante kann der Messerkopf mit der Antriebseinrichtung, insbesondere mit der Antriebswelle, koppelbar sein. Hierzu kann eine Kupplungseinrichtung vorgesehen sein, die zwischen dem Messerkopf und der Antriebseinrichtung wirksam ist oder wird. Die Kupplungseinrichtung kann wie vorstehend und/oder nachfolgend beschrieben zum Koppeln der Antriebseinrichtung mit dem Messerkopf ausgebildet sein. So kann in einer Variante, in der der Messerkopf und die Antriebseinrichtung an verschiedenen Granulierhaubenteilen angeordnet sind, im geschlossenen Zustand der Granulierhaube der Messerkopf über die Kupplungseinrichtung mit der Antriebseinrichtung wirksam gekoppelt sein, wodurch der Messerkopf mittels der Antriebseinrichtung drehantreibar ist.

Die Granuliervorrichtung umfasst eine Granulierhaube, die wie vorstehend und/oder nachfolgend beschrieben ausgebildet sein kann. Das erste Granulierhaubenteil der Granulierhaube umgibt dabei die Lochplatte, und an dem zweiten Granulierhaubenteil ist/sind der Messerkopf und/oder die Antriebseinrichtung der Granuliervorrichtung angeordnet. Der Messerkopf kann an der Innenseite und die Antriebseinrichtung an der Außenseite des zweiten Granulierhaubenteils angeordnet sein. Die Antriebswelle kann dabei durch das zweite Granulierhaubenteil hindurchgeführt sein. Somit kann im geschlossenen Zustand der Granulierhaube der Messerkopf im Innenraum angeordnet und der Lochplatte zugewandt sein. In einer Alternative kann der Messerkopf an dem ersten Granulierhaubenteil, insbesondere an einer Innenseite des ersten Granulierhaubenteils, angeordnet sein. In diesem Fall kann die Antriebseinrichtung an dem zweiten Granulierhaubenteil, insbesondere an einer Außenseite des zweiten Granulierhaubenteils, angeordnet sein. In einer anderen Variante kann der Messerkopf an dem zweiten Granulierhaubenteil, insbesondere an einer Innenseite des zweiten Granulierhaubenteils, angeordnet sein. In dieser Variante kann die Antriebseinrichtung an dem ersten Granulierhaubenteil, insbesondere an einer Außenseite des ersten Granulierhaubenteils, angeordnet sein.

In einer Variante kann die Granuliervorrichtung ein Granulierkopfgehäuse umfassen. Das Granulierkopfgehäuse kann zumindest einen Kanal aufweisen, durch den die aufgeschmolzene und zu granulierende Materialschmelze der Lochplatte zugeführt wird, die an einer stromabwärtigen Seite an dem Granulierkopfgehäuse befestigt sein kann. Das erste Granulierhaubenteil kann an dem Granulierkopfgehäuse angebracht sein. Ferner kann zumindest eine Stütze vorgesehen sein, durch die das Granulierkopfgehäuse, die Lochplatte und/oder das erste Granulierhaubenteil ortsfest angeordnet und/oder auf einem Fundament oder Maschinengestell abgestützt ist/sind.

Gemäß einem weiteren Aspekt ist eine Granulieranlage vorgesehen. Die Granulieranlage kann eine Schneckenmaschine umfassen. Die Schneckenmaschine kann als ein Extruder, beispielsweise ein Zweiwellenextruder, ausgebildet sein. Ferner kann die Granulieranlage eine Granuliervorrichtung und/oder eine Granulierhaube umfassen. Die Granuliervorrichtung und/oder die Granulierhaube kann/können wie vorstehend und/oder nachfolgend beschrieben ausgebildet sein. Die Granuliervorrichtung, beispielsweise deren Granulierhaube und/oder Granulierkopfgehäuse, kann an einem Gehäuseteil der Schneckenmaschine angebracht bzw. mit diesem verbunden sein, insbesondere derart, dass durch die Schneckenmaschine aufgeschmolzenes Material der Granuliervorrichtung bzw. deren Lochplatte zugeführt wird. In einer Variante kann das erste Granulierhaubenteil direkt an dem Gehäuseteil der Schneckenmaschine angebracht sein.

Mit der Erfindung kann insbesondere eine einfache und gute Zugänglichkeit zu Wartungs- und Reinigungszwecken ermöglicht werden. Ferner kann die Einstellung des Messerkopfs und der Messerwelle einfacher und ergonomischer erfolgen. Dies kann insbesondere dadurch begünstigt werden, dass der Messerkopf auf der kalten Seite, d.h., an dem zweiten Granulierhaubenteil, angeordnet ist. Da die Antriebseinrichtung an dem zweiten Granulierhaubenteil angeordnet sein kann und somit nicht mehr im Weg ist, kann vor der Granuliervorrichtung auch eine Filtereinrichtung, wie eine Siebwechseleinrichtung, zum Filtern der Materialschmelze angeordnet werden.

Nachfolgend werden Ausführungsbeispiele der Erfindung unter Bezugnahme auf Figuren näher beschrieben, dabei zeigen schematisch und beispielhaft:
- Fig. 1: eine Granuliervorrichtung mit einer Granulierhaube in einer Seitenansicht;
- Fig. 2: die Granuliervorrichtung gemäß Fig. 1 mit geschlossener Granulierhaube in einer Vorderansicht;
- Fig. 3: die Granuliervorrichtung gemäß Fig. 1 mit geöffneter Granulierhaube in einer Vorderansicht;
- Fig. 4: eine Detailansicht einer Dichtung der Granulierhaube; und
- Fig. 5: eine Detailansicht einer weiteren Dichtung der Granulierhaube.

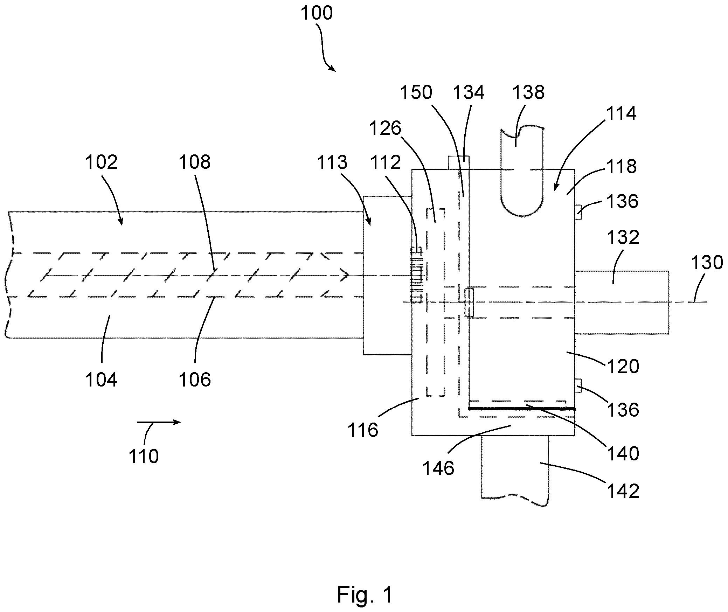

Die Fign. 1 bis 3 zeigen eine Granuliervorrichtung 100 zur Granulierung von Materialsträngen. Im vorliegenden Ausführungsbeispiel ist die Granuliervorrichtung 100 zur Granulierung von Kunststoff-Materialsträngen eingerichtet und einer als Extruder ausgebildeten Schneckenmaschine 102 nachgeordnet. Der Extruder 102 weist in üblicher Weise ein Gehäuse 104 mit mindestens einer Gehäusebohrung 106 auf, in der eine jeweilige Behandlungselementwelle 108 drehantreibbar angeordnet ist. Der Extruder 102 dient zum Aufschmelzen und Homogenisieren eines zu granulierenden Kunststoffmaterials, das als Kunststoffschmelze in einer Förderrichtung 110 aus einer Austragszone des Extruders 102 austritt und einer Lochplatte 112 zum Erzeugen der Kunststoff-Materialstränge zugeführt wird. Die Lochplatte 112 ist an einer stromabwärtigen Seite an dem Extruder 102 angeordnet. An den Extruder 102 ist ein Granulierkopfgehäuse 113 angeschlossen. Das Granulierkopfgehäuse 113 weist zumindest einen Kanal auf, durch den die aufgeschmolzene und zu granulierende Materialschmelze der Lochplatte 112 zugeführt wird, die an einer stromabwärtigen Seite an dem Granulierkopfgehäuse 113 befestigt ist. Die Granuliervorrichtung 100 kann als Heißgranuliervorrichtung ausgebildet sein, bei der der Schnitt von Granulat trocken erfolgt.

Die Granuliervorrichtung 100 weist eine Granulierhaube 114 auf, die die Lochplatte 112 umgibt und am Granulierkopfgehäuse 113 befestigt ist. Wie in den Fign. 1 bis 3 dargestellt, weist die Granulierhaube 114 ein erstes Granulierhaubenteil 116 und ein zweites Granulierhaubenteil 118 auf, wobei das erste Granulierhaubenteil 116 um die Lochplatte 112 der Granuliervorrichtung 100 herum angeordnet und am Granulierkopfgehäuse 113 befestigt ist. Das zweite Granulierhaubenteil 118 ist an dem ersten Granulierhaubenteil 116 schwenkbar angeordnet und mehrteilig ausgebildet.

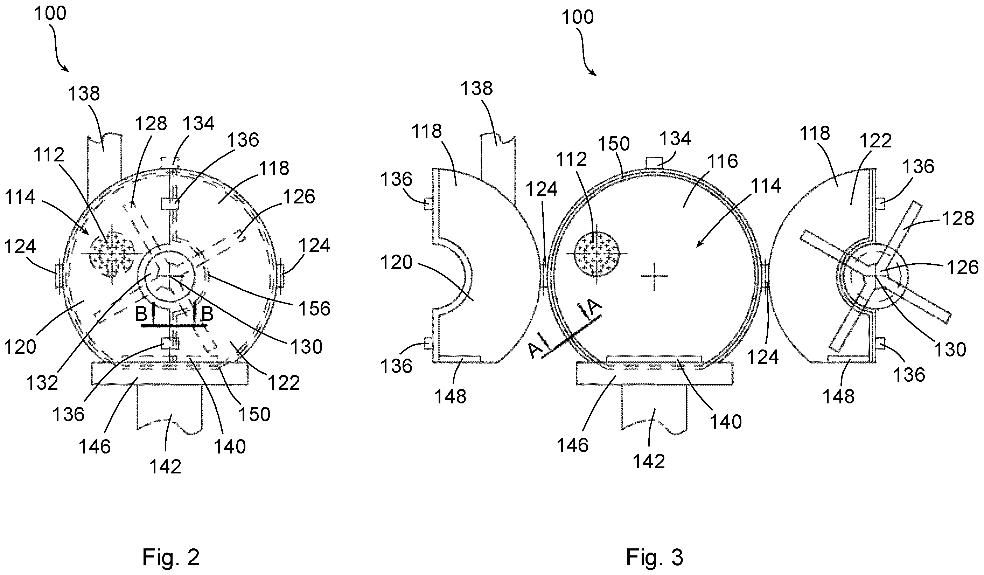

Fig. 2 zeigt einen geschlossenen Zustand und Fig. 3 einen geöffneten Zustand der Granulierhaube 114. In dem vorliegenden Ausführungsbeispiel ist das zweite Granulierhaubenteil 118 zweiteilig ausgebildet und umfasst eine erste Haubenteilhälfte 120 und eine zweite Haubenteilhälfte 122. Die erste Haubenteilhälfte 120 und die zweite Haubenteilhälfte 122 des zweiten Granulierhaubenteils 118 sind jeweils mittels einer Schwenkeinrichtung 124 an dem ersten Granulierhaubenteil 116 schwenkbar montiert. Die Schwenkeinrichtungen 124 können beispielsweise als Scharnier ausgebildet sein. Wie in den Fign. 2 und 3 dargestellt, sind die erste Haubenteilhälfte 120 und die zweite Haubenteilhälfte 122 des zweiten Granulierhaubenteils 118 an gegenüberliegenden Seiten des ersten Granulierhaubenteils 116 angeordnet und mittels der Schwenkeinrichtungen 124 relativ zum ersten Granulierhaubenteil 116 in eine geschlossene und eine geöffnete Position schwenkbar. Hierdurch wir ein besonders schneller und bedienungsfreundlicher Zugang ermöglicht. Je nach Bedarf kann entweder nur eine oder auch beide Haubenteilhälften 120, 122 des zweiten Granulierhaubenteils 118 beispielsweise zu Wartungs- oder Einstellzwecken geöffnet werden.

Ferner umfasst die Granuliervorrichtung 100 einen Messerkopf 126. Der Messerkopf 126 ist zur Erzeugung von Granulat aus den Materialsträngen an einer stromabwärtigen Seite der Lochplatte 112 anordenbar. Zum Schneiden weist der Messerkopf 126 zumindest ein Granuliermesser auf, das an einem Messerflügel 128 befestigt und um eine Drehachse 130 des Messerkopfs 126 rotierbar ist. Der Messerkopf 126 kann eine entsprechende Anzahl an Messerflügeln 128 aufweisen, die sich ausgehend von einem Lagerabschnitt radial zur Drehachse 130 erstrecken. In den Fign. 2 und 3 sind schematisch vier Messerflügel 128 dargestellt. Die Messerflügel 128 sind einteilig mit dem Lagerabschnitt ausgebildet und rotationssymmetrisch um die Drehachse 130 angeordnet. Der Lagerabschnitt kann als Nabe ausgebildet sein und eine Aufnahmebohrung zur Aufnahme und drehfesten Befestigung einer Antriebswelle aufweisen. Der Lagerabschnitt kann somit konzentrisch zur Drehachse 130 angeordnet und drehfest mit der Antriebswelle verbunden sein. An jedem Messerflügel 128 ist an einem dem Lagerabschnitt abgewandten Ende ein Granuliermesser befestigt. Im vorliegenden Ausführungsbeispiel ist im geschlossenen Zustand der Granulierhaube 114 die Lochplatte 112 exzentrisch zu der Drehachse 130 des Messerkopfs 126 angeordnet. Die Granuliervorrichtung 100 ist somit als exzentrische Granuliervorrichtung 100 ausgebildet. Eine Antriebseinrichtung 132 zum Drehantreiben des Messerkopfs 126 um die Drehachse 130 umfasst beispielsweise einen Antriebsmotor und eine in einem Wellenlager gelagerte Antriebswelle. Sowohl der Messerkopf 126 als auch die Antriebseinrichtung 132 sind an der zweiten Haubenteilhälfte 122 des zweiten Granulierhaubenteils 118 angebracht. Dabei ist der Messerkopf 126 an der Innenseite und die Antriebseinrichtung 132 an der Außenseite der zweiten Haubenteilhälfte 122 angeordnet. Die Antriebswelle ist dabei durch die zweite Haubenteilhälfte 122 hindurchgeführt, sodass im geschlossenen Zustand der Granulierhaube 114 der Messerkopf 126 im Innenraum der Granulierhaube 114 angeordnet und der Lochplatte 112 zugewandt ist.

Zum Verriegeln der Granulierhaube 114 ist zumindest eine erste Verriegelungseinrichtung 134 und zumindest eine zweite Verriegelungseinrichtung 136 vorgesehen. Mit der zumindest einen ersten Verriegelungseinrichtung 134 ist das zweite Granulierhaubenteil 118 mit dem ersten Granulierhaubenteil 116 verriegelbar bzw. verschließbar. Im vorliegenden Ausführungsbeispiel ist eine einzige erste Verriegelungseinrichtung 134 zum Verriegeln beider Haubenteilhälften 120, 122 des zweiten Granulierhaubenteils 118 mit dem ersten Granulierhaubenteil 116 vorgesehen. Alternativ können aber auch mehrere erste Verriegelungseinrichtungen 134 vorgesehen sein, beispielsweise zumindest eine erste Verriegelungseinrichtung 134 für jede Haubenteilhälfte 120, 122 des zweiten Granulierhaubenteils 118. Mit der zumindest einen zweiten Verriegelungseinrichtung 136 ist die erste Haubenteilhälfte 120 mit der zweiten Haubenteilhälfte 122 verriegelbar bzw. verschließbar. Wie in den Fign. 1 bis 3 dargestellt, sind vorzugweise zwei zweite Verriegelungseinrichtungen 136 vorgesehen, durch die die beiden Haubenteilhälften 120, 122 des zweiten Granulierhaubenteils 118 miteinander verriegelt werden können. Bei den Verriegelungseinrichtungen 134, 136 kann es sich beispielsweise um Spanner, wie Schnellspanner oder Spannelemente, oder dergleichen handeln. Zur Erhöhung der Gesamtsteifigkeit der Granulierhaube können auch verstärkte Spanner zum Einsatz kommen.

Zum Zuführen eines Fördermediums, beispielsweise von einem Gas oder Luft, um das erzeugte Granulat zu kühlen und/oder aus der Granulierhaube 114 herauszuführen, ist an der ersten Haubenteilhälfte 120 des zweiten Granulierhaubenteils 118 ein Einlass 138 vorgesehen, der in das Innere der Granulierhaube 114 mündet. Zum Abführen des Fördermediums zusammen mit dem erzeugten Granulat aus der Granulierhaube 114 ist an dem ersten Granulierhaubenteil 116 ein Auslassabschnitt 140 mit einer Auslassöffnung vorgesehen, die in einen Abführkanal 142 mündet. Der Auslassabschnitt 140 befindet sich im Wesentlichen unterhalb der Lochplatte 112 und erstreckt sich im Wesentlichen horizontal, beispielsweise senkrecht (in Fig. 1 nach rechts) zu einer als Granulierhaubenrückwand ausgebildeten vertikalen Hauptseitenfläche 144 des ersten Granulierhaubenteils 116. An dem ersten Granulierhaubenteil 116 ist ferner ein Stützabschnitt 146 zum Stützen und/oder Justieren des zweiten Granulierhaubenteils 118 vorgesehen, der sich in gleicher Richtung wie der Auslassabschnitt 140 erstecken kann. Im vorliegenden Ausführungsbeispiel gehen der Auslassabschnitt 140 und der Stützabschnitt 146 ineinander über und bilden so einen gemeinsamen Abschnitt. In einem geschlossenen Zustand der Granulierhaube 114 können sich die beiden Haubenteilhälften 120, 122 des zweiten Granulierhaubenteils 118 an dem Stützabschnitt 146 abstützen. Während des Schließens der beiden Haubenteilhälften 120, 122 werden diese mittels des Stützabschnitts 146 auch justiert bzw. abschnittsweise in Position geführt. Die beiden Haubenteilhälften 120, 122 des zweiten Granulierhaubenteils 118 können hierfür jeweils eine zum Stützabschnitt 146 des ersten Granulierhaubenteils 116 komplementär ausgebildete Struktur und/oder Geometrie 148 aufweisen. Vorteilhaft ist dabei nun, dass sich die beiden Haubenteilhälften 120, 122 des zweiten Granulierhaubenteils 118 in geschlossener Position abstützen können, sodass der Messerkopf 126 und/oder die Antriebseinrichtung 132 ausgerichtet ist/sind und sich das zweite Granulierhaubenteil 118 nicht durchbiegen kann.

Zwischen dem ersten Granulierhaubenteil 116 und dem zweiten Granulierhaubenteil 118 ist eine erste Dichteinrichtung 150 vorgesehen, die derart angeordnet und ausgebildet ist, dass das erste Granulierhaubenteil 116 und das zweite Granulierhaubenteil 118 gegeneinander abdichtbar sind. Im geschlossenen bzw. betriebsfertigen Zustand können das erste Granulierhaubenteil 116 und das zweite Granulierhaubenteil 118 somit dicht gegeneinander anliegen und dadurch den Innenraum der Granulierhaube 114, beispielsweise luftdicht, abschließen. In dem in den Fign. 1 bis 3 gezeigten Ausführungsbeispiel ist die erste Dichteinrichtung 150 eine umlaufende und aufblasbare Dichtung, die im Wesentlichen entlang des Umfangs des ersten Granulierhaubenteils 116 verläuft.

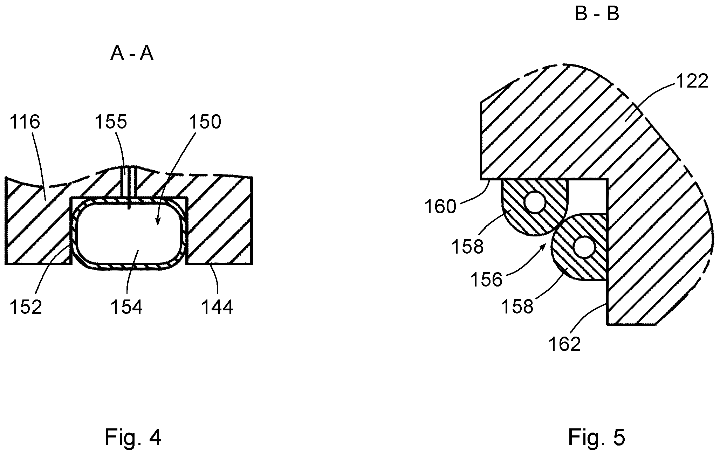

Fig. 4 zeigt in einer detaillierten Schnittansicht entlang des Schnitts A-A die erste Dichteinrichtung 150. Die Dichteinrichtung 150 ist in einer am ersten Granulierhaubenteil 116 vorgesehenen umlaufenden Dichtungsnut 152 aufgenommen und darin gehalten. Die Dichtungsnut 152 verläuft um den Auslassabschnitt 140 des ersten Granulierhaubenteils 116 herum. Bei der Dichteinrichtung 150 handelt es sich um einen aufblasbaren Dichtschlauch 154, der mit Luft befüllt und dadurch aufgepumpt werden kann. Zum Zuführen der Luft kann in dem ersten Granulierhaubenteil 116 zumindest ein Kanal 155 vorgesehen sein. Das Aufpumpen des Dichtschlauchs 154 kann insbesondere im geschlossenen Zustand der Granulierhaube 114 und vor dem Start der Granulierung erfolgen. Vor dem Öffnen der Granulierhaube 114 kann die Luft über den Kanal 155 abgelassen werden.

Des Weiteren ist zwischen der ersten Haubenteilhälfte 120 und der zweiten Haubenteilhälfte 122 des zweiten Granulierhaubenteils 118 eine zweite Dichteinrichtung 156 vorgesehen, die derart ausgebildet ist, dass die erste Haubenteilhälfte 120 und die zweite Haubenteilhälfte 122 des zweiten Granulierhaubenteils 118 gegeneinander abdichtbar sind. Im geschlossenen bzw. betriebsfertigen Zustand können die beiden Haubenteilhälften 120, 122 des zweiten Granulierhaubenteils 118 somit dicht gegeneinander anliegen und dadurch den Innenraum der Granulierhaube 114, beispielsweise luftdicht, abschließen. Die zweite Dichteinrichtung 156 kann an der ersten Haubenteilhälfte 120 und/oder an der zweiten Haubenteilhälfte 122 des zweiten Granulierhaubenteils 118 angeordnet sein.

Fig. 5 zeigt in einer detaillierten Schnittansicht entlang des Schnitts B-B die zweite Dichteinrichtung 156. In dem vorliegenden Ausführungsbeispiel umfasst die zweite Dichteinrichtung 156 zwei Dichtelemente 158, die beide an der zweiten Haubenteilhälfte 122 des zweiten Granulierhaubenteils 118 angeordnet sind. Dabei ist ein erstes Dichtelement 158 an einer ersten Dichtfläche 160 der zweiten Haubenteilhälfte 122 und ein zweites Dichtelement 158 an einer zweiten Dichtfläche 162 der zweiten Haubenteilhälfte 122 angeordnet, beispielsweise aufgeklebt. Die Dichtelemente 158 können beispielsweise, wie in Fig. 5 dargestellt, als Dichtschnur ausgebildet sein. In ihrer Längserstreckung können die beiden Dichtelemente 158 im Wesentlichen parallel zueinander angeordnet sein. Zusätzlich können die beiden Dichtelemente 158 im Wesentlichen zueinander ausgerichtet, beispielsweise wie in Fig. 5 gezeigt, im Wesentlichen gegenüberliegend und in ihrer Quererstreckung im Wesentlichen senkrecht zueinander angeordnet sein. Dabei ist die Quererstreckung kürzer als die Längserstreckung des Dichtelements 156. Ferner liegen die beiden Dichtelemente 158 im geöffneten Zustand und im geschlossenen Zustand der Granulierhaube 114 abschnittsweise aneinander an.

Im Betrieb wird zur Erzeugung der Kunststoff-Materialstränge die Kunststoffschmelze mittels des Extruders 102 durch die Lochplatte 112 gefördert. Zeitgleich wird der Messerkopf 126 mittels der Antriebseinrichtung 132 um die Drehachse 130 drehangetrieben, sodass die Materialstränge mittels der Granuliermesser zu Granulat geschnitten werden. Die Materialstränge werden trocken geschnitten, also im Heißabschlag. Der Messerkopf 126 wird mit einer Drehzahl um die Drehachse 130 angetrieben. Das Granulat wird mittels des Fördermediums durch die Auslassöffnung des Auslassabschnitts 140 in den Abführkanal 142 abtransportiert.

Mit "kann" sind insbesondere optionale Merkmale der Erfindung bezeichnet. Demzufolge gibt es auch Weiterbildungen und/oder Ausführungsbeispiele der Erfindung, die zusätzlich oder alternativ das jeweilige Merkmal oder die jeweiligen Merkmale aufweisen.

Aus den vorliegend offenbarten Merkmalskombinationen können bedarfsweise auch isolierte Merkmale herausgegriffen und unter Auflösung eines zwischen den Merkmalen gegebenenfalls bestehenden strukturellen und/oder funktionellen Zusammenhangs in Kombination mit anderen Merkmalen zur Abgrenzung des Anspruchsgegenstands verwendet werden.

### Bezugszeichen

- 100: Granuliervorrichtung
- 102: Schneckenmaschine / Extruder
- 104: Extrudergehäuse
- 106: Gehäusebohrung
- 108: Behandlungselementwelle
- 110: Förderrichtung
- 112: Lochplatte
- 113: Granulierkopfgehäuse
- 114: Granulierhaube
- 116: erstes Granulierhaubenteil
- 118: zweites Granulierhaubenteil
- 120: erste Haubenteilhälfte
- 122: zweite Haubenteilhälfte
- 124: Schwenkeinrichtung
- 126: Messerkopf
- 128: Messerflügel
- 130: Drehachse
- 132: Antriebseinrichtung
- 134: erste Verriegelungseinrichtung
- 136: zweite Verriegelungseinrichtung
- 138: Einlass
- 140: Auslassabschnitt
- 142: Abführkanal
- 144: Granulierhaubenrückwand
- 146: Stützabschnitt
- 148: Struktur/Geometrie
- 150: erste Dichteinrichtung
- 152: Dichtungsnut
- 154: Dichtschlauch / Dichtung
- 155: Kanal

- 156: zweite Dichteinrichtung
- 158: Dichtelemente
- 160: erste Dichtfläche
- 162: zweite Dichtfläche

## Patentansprüche

1. Granulierhaube (114) für eine Granuliervorrichtung (100) zur Granulierung von Materialsträngen, umfassend:
- ein erstes Granulierhaubenteil (116), das zum Anordnen um eine Lochplatte (112) der Granuliervorrichtung (100) ausgebildet ist; und
- ein zweites Granulierhaubenteil (118), das an dem ersten Granulierhaubenteil (116) schwenkbar angeordnet ist, wobei an dem zweiten Granulierhaubenteil (118) ein Messerkopf (126) und/oder eine Antriebseinrichtung (132) der Granuliervorrichtung (100) anbringbar ist/sind, wobei das zweite Granulierhaubenteil (118) mehrteilig, insbesondere zweiteilig, ausgebildet ist.

2. Granulierhaube (114) nach Anspruch 1, **dadurch gekennzeichnet, dass** das zweite Granulierhaubenteil (118) derart relativ zum ersten Granulierhaubenteil (116) schwenkbar angeordnet ist, dass eine Drehachse (130) des Messerkopfs (126) exzentrisch zu der Lochplatte (112) angeordnet oder anordenbar ist.

3. Granulierhaube (114) nach Anspruch 1 oder 2, **dadurch gekennzeichnet, dass** an dem zweiten Granulierhaubenteil (118) ein Einlass (138) zum Zuführen eines Fördermediums vorgesehen ist.

4. Granulierhaube (114) nach wenigstens einem der vorhergehenden Ansprüche, **dadurch gekennzeichnet, dass** zwischen dem ersten Granulierhaubenteil (116) und dem zweiten Granulierhaubenteil (118) eine erste Dichteinrichtung (150), insbesondere eine umlaufende und/oder aufblasbare Dichtung (154), derart vorgesehen ist, dass diese gegeneinander abdichtbar sind.

5. Granulierhaube (114) nach wenigstens einem der vorhergehenden Ansprüche, **dadurch gekennzeichnet, dass** das zweite Granulierhaubenteil (118) eine erste Haubenteilhälfte (120) und eine zweite Haubenteilhälfte (122) aufweist, wobei zumindest eine der beiden Haubenteilhälften (120, 122) an dem ersten Granulierhaubenteil (116) schwenkbar angeordnet ist.

6. Granulierhaube (114) nach Anspruch 5, **dadurch gekennzeichnet, dass** der Einlass (138) zum Zuführen des Fördermediums an der ersten Haubenteilhälfte (120) des zweiten Granulierhaubenteils (118) angeordnet ist und/oder dass der Messerkopf (126) und/oder die Antriebseinrichtung (132) der Granuliervorrichtung (100) an der zweiten Haubenteilhälfte (122) des zweiten Granulierhaubenteils (118) anbringbar ist/sind.

7. Granulierhaube (114) nach Anspruch 5 oder 6, **dadurch gekennzeichnet, dass** die erste Haubenteilhälfte (120) und die zweite Haubenteilhälfte (122) des zweiten Granulierhaubenteils (118) an gegenüberliegenden Seiten des ersten Granulierhaubenteils (116) angeordnet sind.

8. Granulierhaube (114) nach wenigstens einem der vorhergehenden Ansprüche 5 bis 7, **dadurch gekennzeichnet, dass** zwischen der ersten Haubenteilhälfte (120) und der zweiten Haubenteilhälfte (122) des zweiten Granulierhaubenteils (118) eine zweite Dichteinrichtung (156), insbesondere zumindest ein Dichtelement (158), derart vorgesehen ist, dass diese gegeneinander abdichtbar sind.

9. Granulierhaube (114) nach wenigstens einem der vorhergehenden Ansprüche, **dadurch gekennzeichnet, dass** der Einlass (138) zum Zuführen des Fördermediums einen Anschlussabschnitt aufweist, der im Wesentlichen im Bereich der Schwenkachse des zweiten Granulierhaubenteils (118) bzw. der ersten Haubenteilhälfte (120) des zweiten Granulierhaubenteils (118) angeordnet ist und/oder zu der Schwenkachse im Wesentlichen axial ausgerichtet ist.

10. Granulierhaube (114) nach wenigstens einem der vorhergehenden Ansprüche, **dadurch gekennzeichnet, dass** an dem ersten Granulierhaubenteil (116) ein Auslassabschnitt (140) vorgesehen ist, der eine Auslassöffnung zum Abführen des Granulats aufweist, und/oder dass an dem ersten Granulierhaubenteil (116) ein Stützabschnitt (146) zum Stützen und/oder Justieren des zweiten Granulierhaubenteils (118) vorgesehen ist.

11. Granulierhaube (114) nach wenigstens einem der vorhergehenden Ansprüche, **dadurch gekennzeichnet, dass** zumindest eine erste Verriegelungseinrichtung (134) vorgesehen ist, mit der das zweite Granulierhaubenteil (118) mit dem ersten Granulierhaubenteil (116) verschließbar ist, und/oder dass zumindest eine zweite Verriegelungseinrichtung (136) vorgesehen ist, mit der die erste Haubenteilhälfte (120) des zweiten Granulierhaubenteils (118) mit der zweiten Haubenteilhälfte (122) des zweiten Granulierhaubenteils (118) verschließbar ist.

12. Granuliervorrichtung (100) zur Granulierung von Materialsträngen, umfassend:
- eine Lochplatte (112) zur Erzeugung von Materialsträngen;
- einen Messerkopf(126), der zur Erzeugung von Granulat aus den Materialsträngen an einer stromabwärtigen Seite der Lochplatte (112) angeordnet ist; und
- eine Granulierhaube (114) nach wenigstens einem der vorhergehenden Ansprüche, wobei das erste Granulierhaubenteil (116) die Lochplatte (112) umgibt und an dem zweiten Granulierhaubenteil (118) der Messerkopf (126) und/oder eine Antriebseinrichtung (132) der Granuliervorrichtung (100) angeordnet ist/sind.

13. Granuliervorrichtung (100) nach Anspruch 12, **dadurch gekennzeichnet, dass** die Lochplatte (112) exzentrisch zur Drehachse (130) des Messerkopfs (126) angeordnet ist.
